# EUROPEAN PATENT APPLICATION

(11) **EP 4 258 573 A1**
(43) Date of publication of application: **11.10.2023**
(21) Application number: 22167498.9
(22) Date of filing: 08.04.2022
(51) Int. Cl.: H04B 10/40, H04B 10/69

(54) **PHOTORECEIVER CIRCUIT, PHOTODETECTOR, PHOTODETECTOR ARRAY AND OPTICAL RECEIVER UNIT**

(71) Applicant: Microsoft Technology Licensing, LLC, Redmond, WA 98052-6399 (US)
(72) Inventor: COSTA, Paolo, Redmond, 98052-6399 (US); SHI, Kai, Redmond, 98052-6399 (US); SIEW, Shawn, Redmond, 98052-6399 (US); BOECKER, Charlie, Redmond, 98052-6399 (US)
(74) Representative: Page White Farrer

(57) **Abstract**

A photoreceiver circuit (300) for a photodetector includes a photodiode (122) that receives an optical signal during a charge period and generates a charge corresponding to the intensity of the optical signal. The circuit (300) includes at least one integrating transistor (302) that accumulates the charge generated by the photodiode (122), and a comparator (304) that compares the output of the integrating transistor to a threshold value and in response, provides an output signal. A reset circuit element (301) resets the photodiode (122) after the charge period. The photoreceiver circuit (300) can form part of a photodetector array (150), which can be used as part of an optical transceiver system (1).

## Description

### Field

The present disclosure relates to a photoreceiver circuit, a photodetector, a photodetector array and an optical receiver unit.

### Background

Fibre-optic communications involve encoding data as pulses of light, which are transmitted through optical fibres from a transmitter to a receiver. Fibre-optic communication systems are used in a variety of contexts to transfer information, such as for telephone and internet communication, as well as for broadcasting television signals. Fibre optic communication systems are also widely used for intra-datacentre connectivity, where emerging workloads such as machine learning and resource disaggregation are significantly increasing network demands.

Photoreceivers are employed in the receiving parts of such fibre-optic communication systems and other optical communication systems, where they are used to convert received optical signals into electrical signals. These electrical signals can then be processed to recreate the transmitted data. Commonly, photoreceivers comprise a photodiode to convert the optical signal to an electrical signal and an amplifier to amplify the converted signal so that it is strong enough to be processed. High-speed photoreceivers typically use intensity-modulation direct detection (IMDD), in which they detect modulations in the intensity of the emitted light, enabling data transfer speeds in the order of gigabits per second. Similar photoreceivers may also be employed in LiDAR (Light Detection And Ranging) systems.

The photodiode and the subsequent electrical circuitry for processing the received optical signals are often relatively complex or have limited bandwidth or speed. For example, CMOS Active Pixel Sensors including those with a 4T architecture may have limited bandwidth. Furthermore, the circuitry is costly and occupies a large footprint. The circuitry can also be susceptible to high frequency noise.

It is an aim of the present disclosure to address the issues described above, and any other issues that would be apparent to the skilled reader from the disclosure herein.

### Summary

According to an aspect of the disclosure, there is provided a photoreceiver circuit for a photodetector; comprising: a photodiode configured to receive an optical signal during a charge period and generate a charge corresponding to the intensity of the optical signal; at least one integrating transistor configured to accumulate the charge generated by the photodiode, a comparator configured to compare the output of the integrating transistor to a threshold, and in response, provide an output signal; and a reset circuit element configured to reset the photodiode after the charge period.

In certain embodiments, the use of an integrating transistor and reset circuit element to perform an integrate-and-dump operation of received optical signals may allow the photoreceiver circuit to have a small footprint. This may facilitate monolithic integration of the circuit, reducing cost and complexity. Furthermore, in certain embodiments, the integrating transistor may remove high-order noise, thereby improving the signal-to-noise ratio. In turn, this may reduce the amount of optical power required to emit the optical signals received and processed by the photoreceiver circuit. No charge transfer step over a transfer gate is required, improving speed compared to CMOS 4T sensors.

The reset circuit element may be configured to receive a reset signal, and in response to the reset signal, reset a voltage of the photodiode and leave the photodiode floating.

The photoreceiver circuit may comprise a pair of comparators configured to be operated alternately. Each comparator of the pair of comparators may be configured to compare the output of the integrating transistor to the threshold in response to a respective clock signal. A clock signal received by a first comparator of the pair of comparators may be opposite to a clock signal received by a second comparator of the pair of comparators.

The photoreceiver circuit may comprise a pair of switches, each switch connecting the integrating transistor with a respective one of the comparators. The circuit may be configured to activate a first switch of the pair of switches in response to receipt of a first switching signal, thereby connecting the integrating transistor to a first comparator of the pair of the comparators. The circuit may be configured to activate a second switch of the pair of switches in response to receipt of a second switching signal, thereby connecting the integrating transistor to a second comparator of the pair of the comparators.

The photodiode may comprise a first photodiode segment and a second photodiode segment. The circuit may comprise a first reset circuit element and a first integrating transistor connected to the first photodiode segment. The circuit may comprise a second reset circuit element and a second integrating transistor connected to the second photodiode segment. The circuit may be configured to operate the first photodiode segment and the second photodiode segment alternately.

The photodiode, reset transistor, integrating transistor and comparator may be disposed on a single die. This may avoid the need for costly and complex connections between dies, and the associated sensitivity and bandwidth limitations these connections impose.

According to another aspect of the disclosure, there is provided a photodetector comprising the photoreceiver circuit as defined herein.

According to another aspect of the disclosure, there is provided a photodetector array, comprising a plurality of the photodetectors defined herein. The small footprint of the photoreceiver circuit may assist in arraying the photoreceiver circuit.

According to another aspect of the disclosure, there is provided a chiplet comprising the photoreceiver circuit defined herein. The chiplet may comprise the photodetector array as defined herein.

According to another aspect of the disclosure, there is provided an optical receiver unit for connection to an optical transmitter unit via a fibre optic cable, the optical receiver unit comprising: the photoreceiver circuit defined herein; and a controller configured to: receive the output of the photoreceiver circuit; decode data from the received output, and provide the decoded data to a receiving computer system. The optical receiver unit may comprise the photodetector array defined herein.

According to another aspect of the disclosure, there is provided an optical transceiver unit for connection to another optical transceiver unit via a fibre optic cable, the optical transceiver unit comprising: a light source configured to transmit visible light along the fibre optic cable for receipt at a corresponding photoreceiver circuit of the optical receiver unit; a photoreceiver circuit configured to receive modulated visible light representing from a respective core of the multicore fibre optic cable; and a controller configured to: receive first data from a computer system; and encode and transmit the first data by modulating the visible light output by the array of light sources; the controller further configured to: receive the output of the photodetectors; decode second data from the output, and provide the decoded second data to the computer system.

According to another aspect of the disclosure there is provided an optical transceiver system comprising an optical receiver unit as defined herein, and an optical transmitter unit. The optical transmitter unit may comprise: a light source configured to transmit visible light along a respective core of the multicore fibre optic cable for receipt at a corresponding photoreceiver cicuit of the optical receiver unit; and a controller configured to: receive data from a transmitting computer system, and encode and transmit the data by modulating the visible light output by the array of light sources.

This summary is provided to introduce a selection of concepts in a simplified form that are further described below in the Detailed Description. This Summary is not intended to identify key features or essential features of the claimed subject matter, nor is it intended to be used to limit the scope of the claimed subject matter. Nor is the claimed subject matter limited to implementations that solve any or all of the disadvantages noted herein.

### Brief description of the drawings

For a better understanding of the present invention and to show how the same may be carried into effect, reference will now be made by way of example only to the accompanying drawings, in which:
Figure 1 is a perspective view of an example optical transceiver system;
Figure 2A is a schematic cross section view of an example optical transceiver unit;
Figure 2B is a schematic plan view of an example optical transceiver unit;
Figure 3 is a schematic block diagram of an example optical transceiver unit;
Figure 4 is a schematic diagram of communication channels formed between a micro-LED array and photodetector array;
Figure 5 is a schematic circuit diagram of an example photoreceiver circuit;
Figure 6A is a schematic circuit diagram of another example photoreceiver circuit;
Figure 6B is a timing diagram illustrating operation of the photoreceiver circuit of Figure 6A;
Figure 7A is a schematic circuit diagram of another example photoreceiver circuit; and
Figure 7B is a timing diagram illustrating operation of the photoreceiver circuit of Figure 7A.

### Detailed Description

In overview, examples of the disclosure provide a photoreceiver circuit including a photodiode, a reset transistor, an integrating transistor and a comparator. The circuit provides a low-complexity circuit for "integrating and dumping" received optical signals. In some examples, the circuit comprises a pair of comparators that used in an interleaved or alternating fashion, to avoid a bandwidth bottleneck.

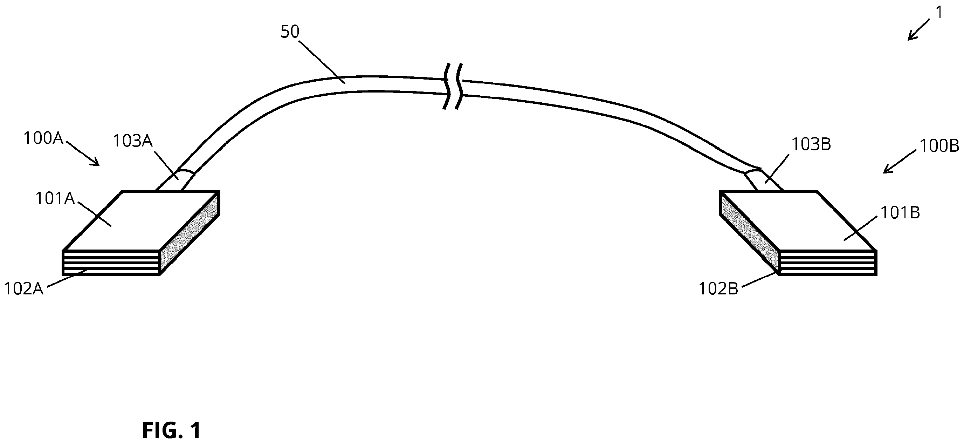

In some examples, the photoreceiver circuit forms part of an array of photodetectors. For example, an array of photodetectors may be used in a system with an array of light sources as described further herein in certain embodiments. However, in other examples the photoreceiver circuit may be incorporated into a standalone photodetector. For example, it may be used in systems with a single light source. Figure 1 illustrates an optical transceiver system 1, which is an example environment in which a photoreceiver circuit 300 of the disclosure may operate.

Use in an optical transceiver system 1 is merely one example of the use of the photoreceiver circuit 300 discussed herein, and the photoreceiver circuit 300 is not limited to such use. In other examples, the photoreceiver circuit 300 may be incorporated into LiDAR devices, or any other device in which photodetectors are employed.

The transceiver system 1 includes a first transceiver unit 100A, a second transceiver unit 100B, and a connecting cable 50 extending between the two transceiver units 100.

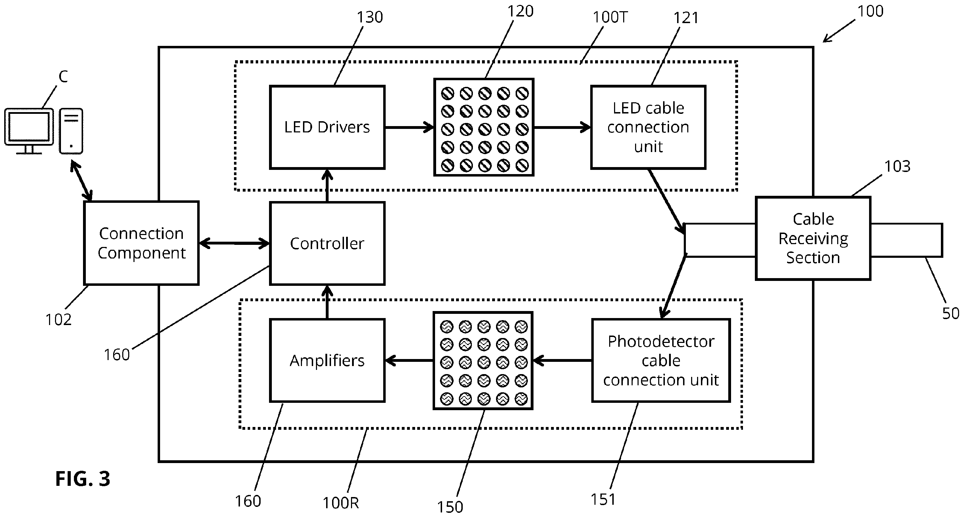

Each transceiver unit 100 is connectable to a respective computer system (C, see Figure 3) such as a datacentre server, so as to enable data transfer between the two computer systems via the connecting cable. In other examples, one or both of the transceiver units 100 may be connected to suitable networking hardware, such as a switch.

Each transceiver unit 100 includes a housing 101 (i.e. 101A for transceiver unit 100A, 101B for transceiver unit 100B) which may retain the other components of the transceiver unit. A connection component 102 may be formed on an exterior of the housing 101, which may connect with a corresponding connection component of the computer system. The connection component 102 may form a detachable connection with the computer system, for example via a plug and socket type arrangement. Data may be provided to and from the computer system via the connection component 102.

Each transceiver unit 100 also comprises a cable receiving section 103 to which the connecting cable 50 is attached. The connection cable 50 may be attachable and detachable from the cable receiving section 103, for example to allow replacement of defective cables 50 or to allow the selection of cables of different lengths. In the example shown, the cable receiving section 103 is at the opposite end of the housing 101 to the connection component 102, but in other examples different configurations of the housing 101 are possible.

The transceiver units 100 are configured to transmit and receive data, as will be discussed in more detailed below. However, in other examples transmitter units that are configured to transmit data but not receive data may be provided. Likewise, in other examples receiver units that are configured to receive data but not transmit data may be provided.

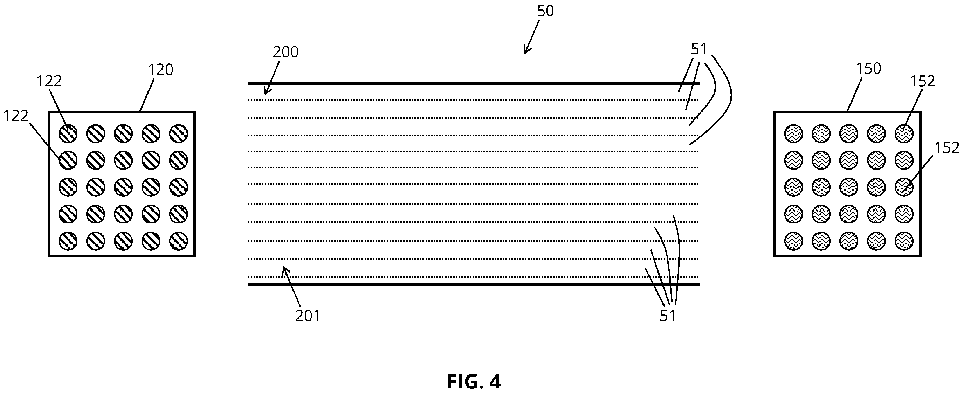

The cable 50 may be a multicore fibre optic cable. Accordingly, the cable 50 comprises a plurality of optical fibre cores (51, see Figure 4) disposed therein. In one example, the cable 50 is a polymer optical fibre (POF) cable. In one example, the cable 50 comprises 200 cores. In other examples the cable 50 may comprise more than 200 cores.

In another example, the cable 50 is a multicore fibre optic cable comprising a bundle (i.e. a plurality of) imaging fibres. The bundle may comprise thousands or tens of thousands of imaging fibres. Each imaging fibre may be thin, for example under 100 microns or under 10 microns.

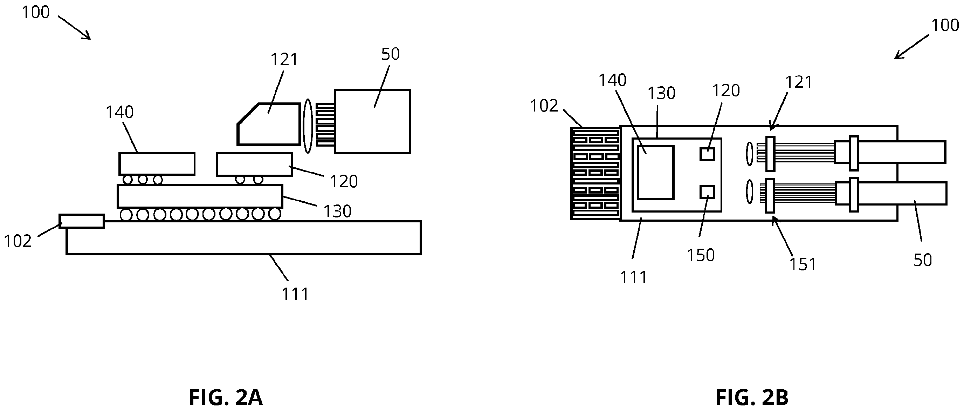

Figures 2A and 2B schematically illustrate the transceiver unit with the housing 101 removed. The transceiver unit 100 comprises a board (e.g. a printed circuit board an interposer board) 111, upon which other components of the transceiver unit 100 are arranged, and which provides electrical connections between the components.

The connection component 102 is formed on one end of the interposer board 111, and may for example be integral thereto.

The transceiver unit 100 further comprises a micro-LED array 120. The micro-LED array 120 is electrically connected to a plurality of LED drivers 130 that drive the micro-LEDs in the micro-LED array 120. In one example, one driver 130 is provided per LED in the array 120.

The micro-LED array 120 is situated on top of the drivers 130 in the example shown. Accordingly, the drivers 130 are discrete and separate from the micro-LEDs. However, in other examples the drivers 130 may be co-packaged or stacked with the micro-LEDs. The drivers 130 drive the micro-LED array 120 to generate modulated visible light, which is transmitted along the cable 50.

The micro-LED array 120 is an example of an array of light sources configured to generate visible light. In other examples, other types of LEDs or vertical-cavity surface-emitting lasers (VCSELs) could be employed to generate visible light. In such examples, the LED drivers 130 may be driven by suitable drivers instead of the LED drivers 130.

In one example described herein the transceiver unit 100 further comprises a photodetector array 150, which comprises a plurality of photodetectors. It is noted that in other embodiments a single photodetector may be used. The photodetector array 150 may comprise an image sensor such as CMOS (Complementary metal-oxide-semiconductor) sensor, charge-coupled device (CCD) or the like. The photodetector array 150 receives modulated visible light from a micro-LED array 120 of another transceiver unit 100 via the cable 50, and generates electrical signals therefrom. Like the micro-LED array 120, the photodetector array 150 may be disposed on top of the drivers 130.

The transceiver unit 100 further comprises a controller 140. The controller 140 is configured to receive data from a computer system via the connection component 102. The controller 140 encodes and transmits the data along the cable 50, by controlling the LED drivers 130 to modulate the visible light output by the array of micro-LEDs 120.

The controller 140 is also configured to receive electrical signals from the photodetector array 150 and decode them. The decoded signals include data transmitted by another transceiver unit 100. The controller 140 then provides the data to the connected computer system via the connection component 102.

In one example, an on-off keying (OOK) coding scheme may be used to encode the data. In the OOK coding scheme, a simple two-level signal is employed, where a high value represents a binary "1" and a low value represents a binary "0". Alternatively, a high value may represent "0" and a low value may represent "1". For example, the OOK coding scheme may be a non-return-to-zero (NRZ) coding scheme. In NRZ, the emitted light may only have the high value or low value, with no other value representing a neutral or rest condition.

The controller 140 may include analogue circuitry for carrying out the encoding of the signals and/or controlling the LED drivers 130. The controller 140 may include analogue circuitry for decoding the electrical signals received from the photodetector array 150. In some examples, the controller 140 may not include any digital circuitry for processing signals.

For example, the controller 140 may comprise one or more equalizers implemented in analogue circuitry. The controller 140 may include a feed forward equaliser (FFE), which forms part of the analogue circuitry for carrying out the encoding of the signals or part of the analogue circuitry for decoding the signals. The controller 140 may include a decision feedback equaliser (DFE), which may form part of the analogue circuitry for decoding the signals.

The micro-LED array 120 may be optically connected to the cable 50 by an LED cable connection unit, generally indicated by reference number 121. The LED cable connection unit 121 may include one or more lenses for directing light emitted by the micro-LED array 120 into the cable 50 and/or one or more filters for filtering the emitted light. The LED cable connection unit 121 may further comprise any suitable hardware for restraining and positioning the cable 50 or fibres thereof.

Similarly, the photodetector array 150 may be optically connected to the cable 50 by a photodetector cable connection unit 151. The connection unit 151 may include one or more lenses for directing light received via the cable 50 to the photodetector array 150 and/or one or more filters for filtering the received light.

Figure 2B schematically illustrates two connection cables 50 - one connected to the micro-LED array 120 for transmitting signals and another connected to the photodetector array 150 for receiving signals. However, the transceiver units 100 may instead be connected by a single connection cable 50 having multiple cores or fibres, with some fibres or cores of the cable 50 being used for transmission and others used for receipt of signals by a transceiver unit 100.

Figure 3 schematically illustrates the example transceiver unit 100. In addition to the components described above, Figure 3 illustrates that a plurality of amplifiers 160 may be connected between the photodetector array 150 and the controller 140. The amplifiers 160 may amplify the output of the photodetector array 150, so that a usable voltage is provided to the controller 140. The amplifiers 160 may comprise a plurality of discrete transimpedance amplifiers (TIAs). In other examples, the amplifiers 160 may be integrated into the photodetector array 150. That is to say, the amplifiers 160 and photodetectors 150 may be disposed on the same die.

Figure 3 also illustrates that the transceiver unit 100 comprises a transmitter section 100T and a receiver section 100R. The controller 140 and the transmitter section 100T may form a transmitter unit. The controller 140 and the receiver section 100R may form a receiving unit. In some examples, one of the transmitter section 100T or receiver section 100R can be omitted so as to provide a device comprising only a receiving unit or only a transmitting unit. In such examples, the controller 140 may comprise circuitry to carry out only transmitting or only receiving.

In some examples, components of the transceiver unit 100 may be implemented as one or more chiplets. A chiplet is a small integrated circuit (i.e. a single die), which is designed to be combined with other chiplets on an interposer substrate to form a package. For example, the chiplets may communicate with one another using a suitable communication protocol, such as the Universal Chiplet Interconnect Express (UCIe) protocol.

Particularly, the transceiver unit 100 may comprise a first chiplet including the micro-LED array 120. The transceiver unit 100 may also comprise a second chiplet, which includes the photosensor array 120. The second chiplet may also include the amplifiers 160. In another example, the transceiver unit 100 comprises a chiplet including the micro-LED array 120 and photosensor array 150.

By disposing the some or all of the transmitter components or receiver components on chiplets, these aspects of the transceiver unit 100 are advantageously modular. This facilitates the easy construction of receiving units, transmitting units and transceiver units having various numbers of transmitter sections 100T and/or receiver sections 100R.

Turning now to Figure 4, the arrangement of channels provided by the micro-LED array 120 and photodetector array 150 is illustrated. Particularly, Figure 4 illustrates that the micro-LED array comprises a plurality of communication channels 200, wherein each communication channel 200 is formed between an LED 122 of the micro-LED array 150 and a photodetector 152. For simplicity in the Figure, only some of the communication channels 200, LEDs 122, photodetectors 152 and cores 51 are labelled.

In one example, each communication channel 200 corresponds to a single core 51 of the cable 50. That is to say that the LED 122 and corresponding photodetector 152 may communicate along exactly one core 51. However, in other examples, each communication channel 200 may comprise a plurality of cores 51. The cores 51 may receive light from a single LED 122, or a plurality of LEDs 122. For example, if a cable 50 comprising imaging fibres is used, a plurality of the imaging fibres may be used per channel.

Accordingly, the number of available communication channels 200 provided is defined by the number of LEDs 122 and corresponding photodetectors 152. In the example shown in the Figure, the micro-LED array is a 5x5 array and the photodetector array 150 is a 5x5 array. Accordingly, 100 communication channels 200 may be available between the micro-LED array 120 and photodetector array 150. In other examples, micro-LED arrays 120 and photodetector arrays 150 of other sizes may be provided, for example 10x10, 20x20 or 30x30, to provide a larger number of communication channels.

In one example, the micro-LEDs 122 are configured to emit light at longer wavelengths in the visible spectrum. For example, the LEDs 122 may emit yellow or red light. In other words, visible light with a wavelength in the range of 500 to 700 nanometres (nm), or 580 to 700nm. The use of longer wavelength visible light may reduce chromatic dispersion. In other examples, the light sources may emit in the range of 400 to 1000nm.

The maximum data transfer rate over each communication channel 200 depends upon the speed at which the LEDs 122 are modulated by the controller 140. In one example, the maximum data transfer rate per channel 200 is 500 Megabits per second (Mbps). In another example, the maximum data transfer rate per channel 200 is 2 Gigabits per second (Gbps). In other examples, the data transfer rate per channel 200 is under 10 Gbps, for example under 8 Gbps, under 7 Gbps, under 6 Gbps, under 5Gbps, under 4 Gbps or under 3Gbps. In one example, the micro-LED array 120 is a micro-LED array 120 manufactured by Lumiode, Inc or Lumileds Holding B.V, which can be modulated at a sufficiently high rate to enable the data transfer.

These maximum data transfer rates may be relatively slow compared to other optical transmission systems that employ laser light sources or complex coding schemes. However, the large number of available channels 200 allows the controller 140 to transmit data in parallel over a plurality of channels 200. For example, a transceiver system 1 with 100 channels 200 at a transfer rate of 2Gbps provides a bandwidth of 200Gbps. By providing larger arrays 120,150 or more cables 50, more bandwidth can be readily provided. The use of commodity components such as visible light micro-LEDs and CMOS photodetector arrays enables the cost-effective provision of a large number of channels 200.

One or more of the communication channels 200 may be control channels 201 used by the controller 140 to transmit control signals instead of data. For example, a control channel 201 may carry clock forwarding information, training sequence information, or redundant information. Similarly, the controller 140 may use control signals received over a control channel 201 to decode the received signals. For example, the controller 140 may use the control signals in clock data recovery, forward error correction or equalisation.

In one example, not all of the LEDs 122 and photodetectors 152 are used as communication channels 200. For example, it may be desirable to provide more LEDs 122 than are required for communication channels 200. This may be referred to as "overprovisioning" the LEDs 122. Accordingly, in the event of failure of an LED 122, another LED 122 can be used to form a replacement communication channel. The overprovisioning of the LEDs 122 may also assist in alignment of the LEDs 122 with the cores of the cable 50. For example, a misaligned LED 122 may not be used as a communication channel 200, in view of the large number of other available LEDs 122. In other examples, a plurality of LEDs 122 may be provided for use in a single communication channel 200. Accordingly, even if some of the plurality of LEDs 122 used for a communication channel 200 are misaligned or faulty, then other of the LEDs 122 allocated to that channel will be aligned and/or in proper working order.

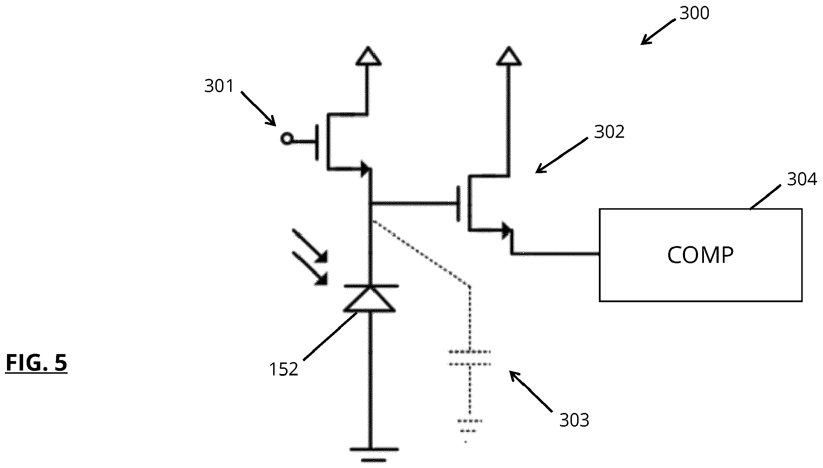

Figure 5 illustrates an example photoreceiver circuit 300. The photoreceiver circuit 300 comprises a photodiode 152, a reset circuit element, for example in the form of transistor 301 connected to the photodiode 152, and at least one "integrate and dump" circuit element, for example in the form of transistor 302 connected to the photodiode 152 configured to perform an integrate and dump operation. The capacitor 303 shown in Figure 5 also illustrates the intrinsic capacitance of the photodiode 152. The output of the transistor 302 is electrically connected to a comparator 304.

In use, the photodiode 152 is first reset by applying a reset pulse to the gate of the reset transistor 301. This causes the reset transistor 301 to be activated for a short time (e.g. 50 picoseconds), the photodiode 122 is left floating. Subsequently, while the photodiode is floating an optical signal arrives at the photodiode 152, for example emitted by the micro-LED array 120 and conveyed along the cable 50. The photodiode 152 accumulates charge (due to the intrinsic capacitor 303) during this operation. These charges are accumulated at the gate of the integrate and dump transistor 302, which causes an increase in the drain voltage . This enables the charges accumulated at the gate of the transistor 302 to be read out and applied to one input of the comparator 304. Although not shown in Figure 9, the comparator 304 also receives a threshold value. If the accumulated charges exceed the threshold value, the output signal provided by the comparator 304 is a "1", otherwise the output signal is a "0". After a certain time period a subsequent reset pulse is applied to the gate of the reset transistor 301. The time period may be referred to herein as a charge period, and corresponds to the data rate of the received optical signals. This discharges the capacitor 303 so that the operation can be repeated with a subsequent optical signal.

The output signals of the comparator 304 may be transmitted to the controller 140, for example via an amplifier of the amplifiers 160. In other examples, amplifiers 160 may be omitted, for example on the basis that the output of the photoreceiver circuit 300 is sufficiently amplified to be processed by the controller.

The photoreceiver circuit 300 of Figure 5 is relatively simple circuit for performing an "integrate and dump" operation, in which the charge associated with an optical signal received at the photodiode 152 is collected and read, before "dumping" the accumulated charge and resetting the photodiode 152 ready for receipt of the next optical signal. This reduces complexity and the footprint of the circuit. The use of an integrate function removes high-order noise, as the input signal is averaged across the charge period between two activations of the reset transistor 301.

The circuit 300 may be a monolithically integrated circuit. In other words, the circuit 300 can be integrated into a die comprising the photodiode 152, rather than the photodiode 152 being provided on a different die to the other components of the circuit. Connections between dies (e.g. by wire-bonds) may impose sensitivity and bandwidth limitations, and increase cost and complexity.

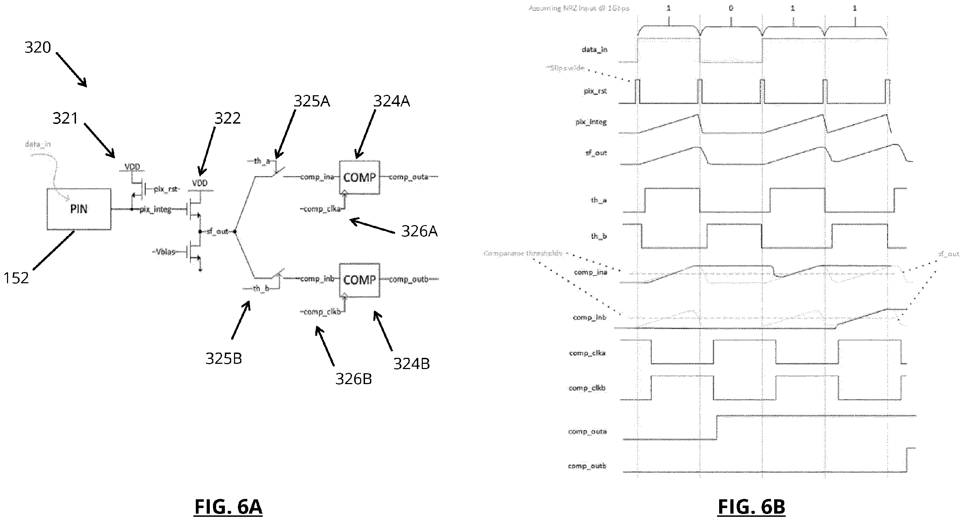

Figure 6A schematically illustrates another example photoreceiver circuit 320. The photoreceiver circuit 320 is similar to the photoreceiver circuit 300, with corresponding components having the reference numerals used in Figure 5 incremented by 20. However, in contrast to the circuit 300, the photoreceiver circuit 320 includes two comparators 324A and 324B. Each comparator 324A, 324B has an associated switch 325A, 325B. Furthermore, each comparator 324A,324B receives input from a respective clock signal 326A, 326B. The photoreceiver circuit 310 is configured to alternately operate comparator 324A and 324B.

Figure 6B is a timing diagram illustrating the operation of the circuit 320. A brief explanation of the various signals is set out below:
- data_in represents the optical signal received by the photodiode 152.
- pix_rst is the reset signal applied to the reset transistor 321
- pix_integ is the charge output by the photodiode 152;
- sf_out is the output of the transistors 322
- th_a is the signal activating the switch 325A
- th_b is the signal activating the switch 325B
- comp_ina is the signal received at comparator 324A.
- comp_inb is the signal received at comparator 324B
- comp_clka is the clock signal applied to comparator 324A
- comp_clkb is the clock signal applied to comparator 324B
- comp_outa is the output of comparator 324A
- comp_outb is the output of comparator 324B

Also shown on the parts of the timing diagram relating to comp_ina and comp_inb is the threshold applied by the comparator.

The timing diagram of Figure 6B illustrates the electrical signals at the photoreceiver circuit 320, as it successively receives the optical signals representative of "1", "0", "1" and "1" in successive charge periods, as shown in the data_in portion of the diagram.

The timing diagram illustrates that the photodiode 152 is reset by the reset signal pix_rst. As discussed above, the reset signal is activated periodically and only for a short time (e.g. 50 ps), with the reset signal defining the transition between charge period, and thus each optical signal.

A first optical signal is received at the photodiode 152. A switching signal signal th_a closes the switch 325A. The switch 325B is opened by signal th_b. Accordingly, the integrated output of the photodiode 152 is directed to comparator 324A.

The pix_integ signal, and consequently sf_out signal, increase linearly as light is received at the photodiode 152. Likewise, the signal comp_ina received at the comparator 324A increases as the charge accumulate.

Upon receipt of the clock signal comp_clka, the comparator 324A compares the accumulated charge (i.e. input signal comp_ina) to a predetermined threshold. If it exceeds the threshold, which is the case for the first optical signal the comparator 324A outputs a "1".

The timing diagram illustrates that the comparison made by the comparator 324 is made after the subsequent reset of the photodiode 152. In other words, the clock signal 326 is delayed with respect to the reset signal pix_rst. This is because the circuit integrates and holds the voltage, allowing the comparison to be made after the reset.

Subsequently, the photodiode 152 is reset for receipt of the next optical signal in the next charge period. This causes the pix_integ and sf_out signals to be reset. In this cycle, the signal th_a opens the switch 325A and signal th_b closes the switch 325B. Accordingly, the output of the photodiode 152 is directed to comparator 324B. A second optical signal is received, this time representing a "0". Accordingly, the light received at the photodiode 152 does not result in the increase of the pix_integ signal and sf_out signal. Accordingly, the signal at the comparator 324B does not exceed the threshold on the receipt of clock signal comp_clkb 326B, and so the comparator 324B outputs a "0".

The process then repeats a third time with a third reset signal pix_rst. Like the first cycle, the optical signal received in this charge period represents a "1". The switch switching signal th_a closes the switch 325A. The switch 325B is opened by signal th_b. Accordingly, the integrated output of the photodiode 152 is once again directed to comparator 324A. As for the first optical signal, the integrated charge at the comparator 324A exceeds the threshold at the time the clock signal comp_clka is received and thus the comparator 324A outputs a "1".

The process then repeats a fourth time with a fourth reset signal pix_rst. Like the second cycle, the signal th_a opens the switch 325A and signal th_b closes the switch 325B. Accordingly, the output of the photodiode 152 is directed to comparator 324B. In this charge period, the input optical signal represents a "1". Accordingly, the signals pix_integ and sf_out increase, as does comp_inb. Upon receipt of the clock signal comp_clkb, comparator 324B outputs a "1".

The process continues in this manner, with the comparators 324A, 324B operating in an interleaved fashion based on opposing clock signals 326A, 326B and opposing switch signals. Accordingly, further comparator bandwidth is provided, avoiding any potential bottleneck caused by the comparator 304.

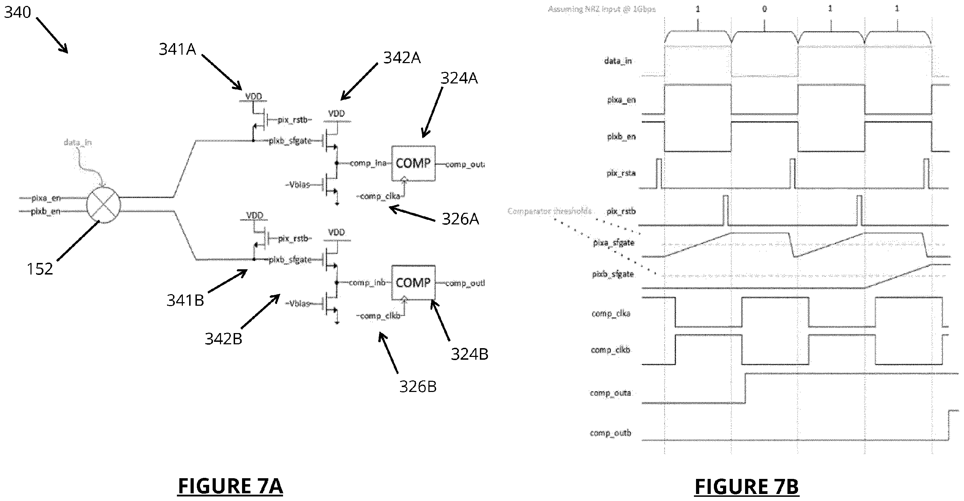

Figure 7A illustrates a further example photoreceiver circuit 340. The photoreceiver circuit 340 is similar to the photoreceiver circuit 320, with corresponding components having the reference numerals used in Figure 6A incremented by 20. Like the photoreceiver circuit 320, the photoreceiver circuit 340 includes two comparators 344A, 344B which are used in an alternating manner. However, in the example of Figure 7A, the photoreceiver 152A is a differential photoreceiver. In other words, the photodetector 152A comprises two segments that each act as a separate photosensor.

A first segment or pixel a is connected to a first reset transistor 341A, a first integrating transistor 342A and a first comparator 344A. A second segment or pixel b is connected to a second reset transistor 341B, a second integrating transistor 342B and a second comparator 344B. Each pixel is active when it receives an activation signal. The segments are alternately activated, thereby alternately using their respective comparators 344.

Figure 7B is a timing diagram illustrating operation of the photoreceiver circuit 340. data_in, comp_clka, comp_clkb, comp_outa, comp_outb have the same meaning as in Figure 6B. In addition the timing diagram shows the activation signal pixa_en for activating pixel a and the activation signal pixb_en for activative pixel. The timing diagram also illustrates separate reset signals for pixels a and b, respectively show as pix_rsta and pix_rstb. The signals pixa_sfgate and pixb_sfgate are the signals received respectively at integrating transistor 342A and 342B.

As illustrated, the pixels a and b are alternately activated by opposing activation signals pixa_en and pixb_en. Accordingly, pixel a is used for receiving a first optical signal and pixel b is used for receiving a second optical signal, and so on. Before each pixel is activated, it is reset by the reset signal. As each pixel is only used for every other optical signal, the reset signals pix_rsta and pix_rstb have half the frequency of the reset signal used in circuits 300 and 320.Each of the photoreceiver circuits 300, 320, 340 may form or be incorporated into a photodetector (e.g. a pixel) of a photodetector array 150 as discussed herein. In other words, a photodetector array 150 discussed herein may comprise a plurality of photodetectors, wherein each photodetector comprises a photoreceiver circuit 300, 320, 340.

The reset circuit element 301, 321, 341 discussed above takes the form of a transistor. However, in other examples, the reset circuit element may comprise a plurality of transistors. The reset circuit element may additionally or alternatively comprise circuit elements other than transistors. The transistors may be transistors of different types, including CMOS and PNP transistors.

In some examples, the photoreceiver circuits 301, 321, 341 may include only the elements discussed herein. That is to say the circuits may in some examples not include any further elements in order to perform the function of integrating and dumping the received optical signal.

Although the photoreceiver circuits of Figure 5-7 have been explained in the context of optical transceiver systems such as those described herein, the photoreceiver circuits can be employed in photosensor arrays used in other applications. For example, the photoreceiver circuits may be employed in LiDAR systems.

The circuits and systems described herein may allow the use of commodity electronics components in optical communication. The use of such components enables the cost-effective provision of a plurality of parallel data transmission channels. The circuits have a small footprint, allowing them to be monolithically integrated with a photodetector. The circuits advantageously provide a high signal-to-noise ratio, which in turn may reduce the amount of optical power needed to transmit the optical signals.

It will be understood that the controller or processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware). It will be understood that the controller described herein may include both digital and analogue circuitry. References to particular functionality being provided by analogue circuitry does not exclude the possibility of the controller carrying out other functions using digital circuitry.

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A photoreceiver circuit (300) for a photodetector; comprising:
a photodiode (122) configured to receive an optical signal during a charge period and generate a charge corresponding to the intensity of the optical signal;
at least one integrating transistor (302) configured to accumulate the charge generated by the photodiode (122);
a comparator (304) configured to compare the output of the integrating transistor to a threshold value and in response, provide an output signal; and
a reset circuit element (301) configured to reset the photodiode (122) after the charge period.

2. The photoreceiver circuit of claim 1, wherein the reset circuit element (301) is configured to receive a reset signal, and in response to the reset signal, reset a voltage of the photodiode (122) and leave the photodiode (122) floating.

3. The photoreceiver circuit of claim 1 or 2, comprising a pair of comparators (324A, 324B) configured to be operated alternately.

4. The photoreceiver circuit of claim 3, wherein each comparator (324) of the pair of comparators (324A, 324B) is configured to compare the output of the integrating transistor (322) to the threshold in response to a respective clock signal (326A, 326B), and
wherein a clock signal (326A) received by a first comparator (324A) of the pair of comparators (324A, 324B) is opposite to a clock signal (326B) received by a second comparator (324B) of the pair of comparators (324A, 324B).

5. The photoreceiver circuit of claim 3 or 4, comprising:
a pair of switches (325A, 325B), each switch (325A, 325B) connecting the integrating transistor (322) with a respective one of the comparators (324A, 324B),
wherein the circuit (300) is configured to activate a first switch (325A) of the pair of switches (325A, 325B) in response to receipt of a first switching signal, thereby connecting the integrating transistor (322) to a first comparator (324A) of the pair of the comparators (324A, 324B), and
wherein the circuit (300) is configured to activate a second switch (325B) of the pair of switches (325A, 325B) in response to receipt of a second switching signal, thereby connecting the integrating transistor (322) to a second comparator (324B) of the pair of comparators (324A, 324B).

6. The photoreceiver circuit of claim 3, wherein:
the photodiode (152) comprises a first photodiode segment and a second photodiode segment;
the circuit (300) comprises:
a first reset circuit element (341A) and a first integrating transistor (342A) connected to the first photodiode segment;
a second reset circuit element (341B) and a second integrating transistor (342B) connected to the second photodiode segment;
wherein the circuit (300) is configured to operate the first photodiode segment and the second photodiode segment alternately.

7. The photoreceiver circuit of any preceding claim, wherein the photodiode (152), reset circuit element (301), integrating transistor (302) and comparator (304) are disposed on a single die.

8. A photodetector comprising the photoreceiver circuit (300) of any preceding claim.

9. A photodetector array (150), comprising a plurality of the photodetectors of claim 8.

10. A chiplet comprising the photodetector array (150) of claim 9.

11. An optical receiver unit (100R) for connection to an optical transmitter unit (100T) via a multicore fibre optic cable, the optical receiver unit comprising:
the photoreceiver circuit (300) of any of claims 1 to 8;
a controller (140) configured to:
receive the output of the photoreceiver circuit (300);
decode data from the received output, and
provide the decoded data to a receiving computer system (C).

12. An optical transceiver system (1), comprising:
the optical receiver unit (100R) of claim 11, and
an optical transmitter unit (100T),
wherein the optical transmitter unit (100T) comprises:
a light source (122) configured to transmit visible light along a fibre optic cable for receipt at the photoreceiver circuit (300) of the optical receiver unit (100R); and
a controller (140) configured to:
receive data from a transmitting computer system, and
encode and transmit the data by modulating the visible light output by the array of light sources.

13. An optical transceiver unit (100) for connection to another optical transceiver unit (100) via a fibre optic cable (50), the optical transceiver unit (100) comprising:
a light source (122) configured to transmit visible light along the fibre optic cable for receipt at a photoreceiver circuit (300) of the other optical transreceiver unit (100);
the photoreceiver circuit (300) of any of claims 1 to 8 configured to receive modulated visible light from the fibre optic cable; and
a controller (140) configured to:
receive first data from a computer system (C); and
encode and transmit the first data by modulating the visible light output by the light source (122);
the controller (140) further configured to:
receive the output of the photoreceiver circuit (300);
decode second data from the output, and
provide the decoded second data to the computer system (C).

14. The optical transceiver unit (100) of claim 13, comprising an array of light sources, each light source configured to transmit along a respective core of a multicore fibre optic cable (5).

15. The optical transceiver unit (100) of claim 13 or 14, comprising the photodetector array of claim 9.
